(19) Europäisches Patentamt
European Patent Office
Office européen des brevets

(11) **EP 0 912 376 B1**

(12) **EUROPÄISCHE PATENTSCHRIFT**

(45) Veröffentlichungstag und Bekanntmachung des Hinweises auf die Patenterteilung:
**13.03.2002   Patentblatt 2002/11**

(51) Int Cl.⁷: **B60T 8/00**, B60T 8/50, B60T 8/24

(21) Anmeldenummer: **97919387.7**

(22) Anmeldetag: **18.04.1997**

(86) Internationale Anmeldenummer:
**PCT/EP97/01955**

(87) Internationale Veröffentlichungsnummer:
**WO 98/03379 (29.01.1998 Gazette 1998/04)**

(54) **VERFAHREN ZUR VERBESSERUNG DES REGELVERHALTENS EINES ANTIBLOCKIERSYSTEMS**

METHOD OF IMPROVING ABS CONTROL BEHAVIOUR

PROCEDE POUR AMELIORER LE COMPORTEMENT EN REGULATION D'UN SYSTEME ANTIBLOCAGE

(84) Benannte Vertragsstaaten:
**DE FR GB**

(30) Priorität: **18.07.1996  DE 19628973**

(43) Veröffentlichungstag der Anmeldung:
**06.05.1999   Patentblatt 1999/18**

(73) Patentinhaber: **Continental Teves AG & Co. oHG 60488 Frankfurt (DE)**

(72) Erfinder: **BATISTIC, Ivica D-60385 Frankfurt am Main (DE)**

(74) Vertreter: **Blum, Klaus-Dieter Continental Teves AG & Co. oHG, Guerickestrasse 7 60488 Frankfurt (DE)**

(56) Entgegenhaltungen:
**EP-A- 0 545 325          DE-A- 3 413 738 DE-A- 19 622 839**

• **ATZ AUTOMOBILTECHNISCHE ZEITSCHRIFT, Bd. 97, Nr. 1, 1.Januar 1995, Seiten 8/9, 12-19, XP000486415 LEFFLER H ET AL: "BREMSANLAGE UND SCHLUPF-REGELSYTEME DER NEUEN 7ER-REIHE VON BMW BRAKE AND WHEEL SLIP CONTROL SYSTEMS OF THE NEW 7 SERIES BMW" in der Anmeldung erwähnt**
• **ATZ AUTOMOBILTECHNISCHE ZEITSCHRIFT, Bd. 98, Nr. 4, 1.April 1996, Seiten 188-191, 194 - 196, 198, XP000582531 KURZ G ET AL: "BREMSANLAGE UND SCHLUPFREGELUNGS-SYSTEME DER NEUEN BAUREIHE 5 BMW" in der Anmeldung erwähnt**

**Beschreibung**

Die Erfindung bezieht sich auf ein Verfahren zur Verbesserung des Regelverhaltens eines Antiblokkiersystems, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zur Erkennung einer Kurvenfahrtsituation und der Kurvenfahrtrichtung gewonnen werden, bei dem bei Kurvenfahrterkennung anstelle des Standard-Regelungsmodus ein Sonder- bzw. Kurven-Regelmodus in Funktion tritt bzw. in Funktion gesetzt wird, der bereits im Teilbremsbereich eine Verringerung des Bremsdrucks an dem kurveninneren Vorderrad und/oder an dem kurveninneren Hinterrad hervorruft.

Bei einer Kurvenfahrterkennung wird bei einem Regelverfahren der hier genannten Art durch die Druckentlastung der kurveninneren Räder ein die Kurvenfahrt ausgleichendes, stabilisierendes Giermoment um die Hochachse des Fahrzeugs erzeugt. Der Bremsdruck an den kurvenäußeren Rädern wird, wenn die Regelung während einer Teilbremsung einsetzt, konstant gehalten oder erhöht sich automatisch durch die Unterbindung eines weiteren Bremsdruckaufbaus an dem oder an den kurveninneren Rädern.

Aus der DE 34 13 738 C2 (P 5547) ist bereits ein Blockierschutzregelungssystem (ABS) mit einer Kurvenfahrterkennungsschaltung, die ebenfalls auf der Radschlupfmessung beruht, bekannt. Zur Kurvenfahrterkennung werden die Schlupfwerte an den Rädern einer Fahrzeugseite addiert, mit der Schlupfsumme der Räder der anderen Fahrzeugseite verglichen und ein Kurvenfahrterkennungssignal erzeugt, sobald die Differenz der Schlupfsummen einen vorgegebenen Grenzwert überschreitet. Bei Kurvenfahrterkennung werden dann Auswahlkriterien, wie "Select-low" oder "Select-high", nach denen der Druckverlauf in den einzelnen Bremsdruckregelkanälen dieser Bremsanlage geregelt wird, und Grenzwerte für das Wirksamwerden dieser Auswahlkritierien variiert. Auf diese Weise soll die Regelung den unterschiedlichen Bedingungen während einer Geradeausfahrt und während einer Kurvenfahrt angepaßt werden.

Aus der älteren DE 21 19 590 A1 ist es bekannt, ein Kurvenfahrterkennungssignal mit Hilfe eines Querbeschleunigungsmeßgerätes, wie eines Quecksilberschalters, zu gewinnen.

Ferner ist es bereits bekannt, die Funktionen eines ABS zu erweitern, indem das System zum Verbessern der Fahrstabilität bzw. Bremsstabilität in der Kurve eingesetzt wird. Hierzu wird während einer Kurvenfahrt und einer Teilbremsung, d.h. bei einem Bremsvorgang, bei dem die ABS-Ansprechschwellen nicht erreicht werden, durch eine gezielte Verzögerung des Bremsdruckaufbaus an den kurveninneren Rädern im Vergleich zum Bremsdruck an den kurvenäußeren Rädern ein stabilisierendes Moment um die Hochachse des Fahrzeugs hervorgerufen ("Bremsanlage und Schlupf-Regelsystem der neuen 7er-Reihe von BMW", ATZ 97(1995),Seiten 8-15 und "Bremsanlage und Schlupf-Regelungssysteme der neuen Baureihe 5 von BMW", ATZ 98(1996) Seiten 188-194). Die Information über den aktuellen Lenkwinkel wird, wenn kein Lenkwinkelsensor verwendet wird, aus der Querbeschleunigung abgeleitet, die wiederum aus den Radsensorsignalen berechnet wird.

Der vorliegenden Erfindung liegt nun die Aufgabe zugrunde, ein Verfahren der eingangs genannten Art zu entwickeln, das durch sicheres Erkennen einer Kurvenfahrt und Reagieren auf diese Situation zu einer erheblichen Verbesserung des Fahrverhaltens des Fahrzeugs bzw. Stabilisierung des Fahrzeugs beiträgt.

Es hat sich gezeigt, daß diese Aufgabe durch das im Anspruch 1 beschriebene Verfahren gelöst wird, dessen Besonderheiten darin liegen, daß im Teilbremsbereich beim Überschreiten eines Schwellwertes einer Radgeschwindigkeiten-Differenz, die die Differenz zwischen den aus den Geschwindigkeiten der beiden Räder einer Fahrzeugseite gebildeten Seiten-Radgeschwindigkssummen darstellt, der Gradient des Bremsdruckaufbaus am kurveninneren Vorderrad und/oder Hinterrad in Abhängigkeit von dem Maß der Überschreitung des Schwellwertes verringert wird.

In der Praxis ist im Sonder- bzw. Kurvenregelmodus die Druckbeeinflussung der Vorderräder von besonderer Bedeutung. In der Regel ist es von Nutzen, gleichzeitig mit dem Absenken des Bremsdruckes am kurveninneren Rad den Bremsdruck am kurvenäußeren Rad zu erhöhen.

Erfindungsgemäß wird also zum Erkennen einer Kurvenfahrtsituation und Bemessen bzw. Verringern des weiteren Druckaufbaus am kurveninneren Rad ein Radgeschwindigkeits-Differenz-Schwellwert herangezogen, dessen Höhe nach einem bevorzugten Ausführungsbeispiel der Erfindung in Abhängigkeit von der Fahrzeuggeschwindigkeit variiert wird. Unterhalb des Schwellwertes gilt der Maximalwert des Bremsdruckaufbaugradienten. Das Maß der Überschreitung des Schwellwertes bestimmt die Verringerung des Gradienten, der von dem ursprünglichen Maximalwert bis zu einem sehr geringen Wert oder praktisch bis auf den Wert Null abnehmen kann.

Nach einem weiteren Ausführungsbeispiel der Erfindung wird die Verringerung des Bremsdruckgradienten durch Übergang zu einem pulsförmigen Einleiten des Bremsdruckes und Variieren des Pulsdauer-/Pulspausen-Verhältnisses, mit dem ein Einlaßventil angesteuert wird, eingestellt.

Die Erfindung bezieht sich also auf die Bremsdruckkorrektur am kurveninneren Rad, insbesondere Vorderrad, zwecks Erhöhung der Lenkbarkeit und Fahrstabilität während einer Kurvenfahrt zur Erhöhung der Fahrzeugstabilität und Verbesserung der Bremsstabilität unter querdynamischen Einflüssen im Teilbremsbereich. Es wird ein stabilisierendes Moment um die Hochachse des Kraftfahrzeugs erzeugt.

Weitere Einzelheiten und Anwendungsmöglichkeiten der Erfindung gehen aus der folgenden Beschreibung von Ausführungsbeispielen anhand der beigefügten Abbildungen hervor.

Es zeigen:

Fig. 1 im Blockschaltbild die wesentlichen elektronischen Komponenten oder Funktionsblöcke eines ABS, das zur Durchführung des erfindungsgemäßen Verfahrens erweitert ist,

Fig. 2 im Flow-Chart die einzelnen Schritte im Programmlauf oder logischen Verknüpfungen des erfindungsgemäßen Verfahrens,

Fig. 3 im Diagramm den Differenz-Schwellwert in Abhängigkeit von der Fahrzeug(referenz)geschwindigkeit und

Fig. 4 ebenfalls im Diagramm Beispiele für vorgegebene Druckaufbaugradienten.

Sowohl das Blockschaltbild als auch das Flow-Chart und das Diagramm sind schematisch vereinfacht, um das wesentliche der Erfindung zu verdeutlichen.

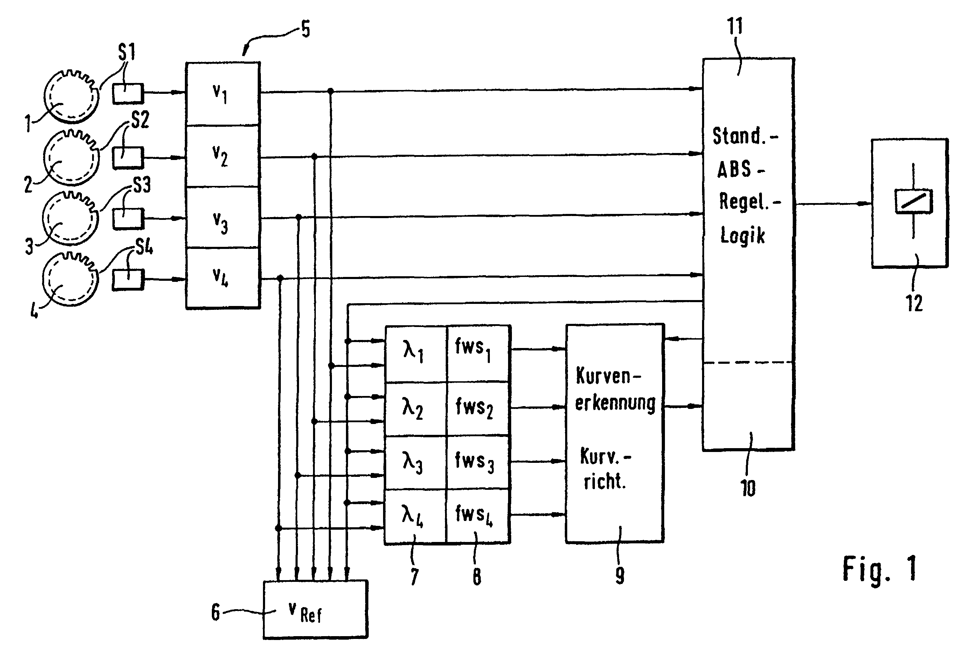

Die prinzipielle Arbeitsweise einer Schaltungsanordnung zur Blockierschutzregelung, die durch Komponenten zur Verbesserung des Regelverhaltens während einer Kurvenfahrt erweitert ist, ist in Fig. 1 wiedergegeben.

Die Eingangsinformationen des Regelsystems werden mit Hilfe von Radsensoren S1 bis S4 gewonnen. Hierzu sind die einzelnen (nicht dargestellten) Fahrzeugräder mit Meßwertgebern oder Zahnscheiben 1 - 4 ausgerüstet, die mit den Fahrzeugrädern umlaufen und in den Meßwertaufnehmern, das sind die ortsfesten Teile der Sensoren S1 - S4, ein Ausgangssignal erzeugen. Diese Ausgangssignale geben in bekannter Weise das Drehverhalten der einzelnen Räder wieder.

Nach dem Aufbereiten der Sensor-Ausgangssignale in einer Schaltung 5 stehen die Radgeschwindigkeitssignale $v_1 - v_4$ zur Verfügung. Durch logische Verknüpfung der Ausgangssignale der Schaltung 5, nämlich der Geschwindigkeitssignale $v_1 - v_4$, in einer Verknüpfungsschaltung 6 wird eine Fahrzeug-Referenzgeschwindigkeit $v_{Ref}$ gebildet, die vor allem als Bezugsgröße zur Bestimmung des Radschlupfes $\lambda_1$ bis $\lambda_4$ der einzelnen Fahrzeugräder und damit auch als Bezugsgröße zur Bremsdruckmodulation dient.

Ein Schaltungsblock 7 enthält die einzelnen Schaltkreise zum Ermitteln des Radschlupfes $\lambda_1$ bis $\lambda_4$ durch Vergleich der Fahrzeug-Referenzgeschwindigkeit mit der jeweiligen Radgeschwindigkeit $v_1 - v_4$. Der Radschlupf ergibt sich bekanntlich aus der Differenz

$$\lambda_i = v_{Ref} - v_i$$

mit i = 1 .... 4.

Bei Verwendung einer programmgesteuerten Schaltung, wie eines Mikrocomputers oder Mikrocontrollers, symbolisiert der Block 7 die Programmschritte zum Errechnen des Schlupfes $\lambda_i$ der einzelnen Fahrzeugräder.

Jedes Schlupfsignal passiert in einem Schaltblock 8 ein Filter mit Tiefpaß-Charakteristik, dessen Filterzeitkonstante in der Größenordnung von 50 - 200 ms liegen kann; in unserem Beispiel liegt die Zeitkonstante bei 70 ms. Der Schaltblock 8 gibt ein gefiltertes Radschlupfsignal $fws_i$ ab bzw. leitet dieses Ausgangssignal zu einer Kurvenerkennung 9 weiter.

In der Kurvenerkennung 9 oder Kurvenfahrterkennung werden die aktuellen und die gefilterten Radschlupfsignale analysiert und ausgewertet. Die Kurvenfahrterkennung findet dabei nach qualitativen und quantitativen Kriterien statt. Die Kurvenrichtung wird ebenfalls durch Auswertung und logische Verknüpfung der Schlupfsignale und Schlupfdifferenzsignale ermittelt. Das Ergebnis dieser Schlupfauswertung mit Hilfe der Schaltung 9 führt dann über eine Zusatzschaltung 10, nämlich einer Zusatzschaltung zu der eigentlichen Standard-ABS-Regelungslogik 11, zur Anpassung der Blockierschutzregelung an die besonderen Bedingungen einer Kurvenfahrt. Anstelle der Standard-Regelung findet nun eine Sonder- oder Kurvenregelung statt.

Der Ausgang der Regelungslogik 11 führt über nicht dargestellte Aufbereitungs- und Auswertungsschaltungen zu den Aktuatoren oder Modulatoren 12, mit denen der Bremsdruck einer Bremsanlage in der erforderlichen Weise beeinflußt wird. Bei den heutigen Antiblockiersystemen werden überwiegend als Aktuatoren 12 elektromagnetisch betätigbare Hydraulikventile zur Modulation und Steuerung des Bremsdruckes in den einzelnen Radbremsen verwendet.

Die eigentliche ABS-Regelungslogik beruht natürlich ebenfalls auf der Auswertung der aufbereiteten Radgeschwindigkeitssignale $v_1 - v_4$ unter Berücksichtigung der Fahrzeug-Referenzgeschwindigkeit $v_{Ref}$.

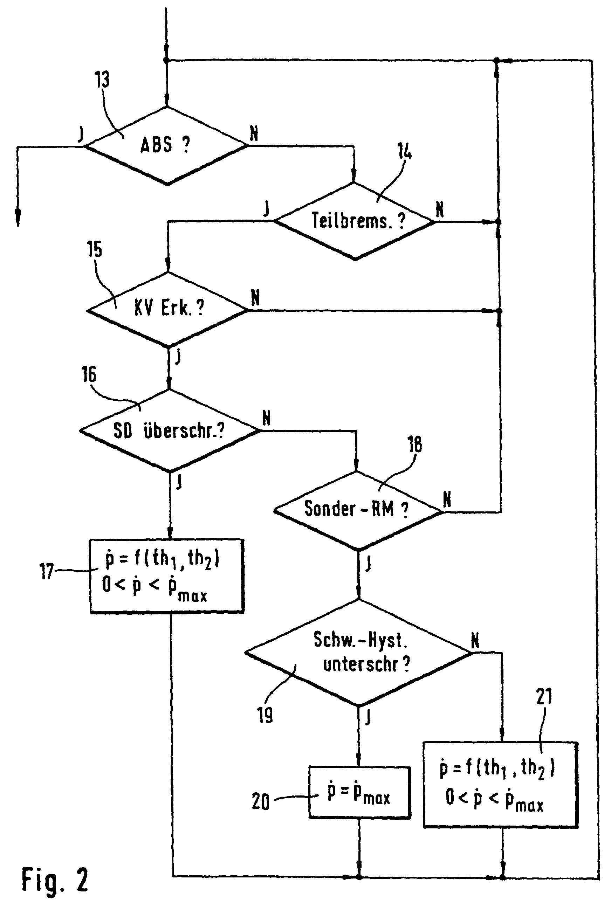

Die Funktionen einer Schaltungsanordnung nach Fig. 1 lassen sich, wie bereits erwähnt wurde, durch programmgesteuerte Schaltungen bzw. durch Programmablauf realisieren. Derartige Reglertechnik wird heutzutage bevorzugt. In Fig. 2 ist daher der Programmlauf, durch den das erfindungsgemäße Verfahren in Regelungsschritte umgesetzt wird, in Form eines Flow-Charts dargestellt. Diese Funktionen, Schritte und logischen Verknüpfungen sind überwiegend in der Kurvenerkennung 9 untergebracht.

Fig. 2 zeigt einen Ausschnitt aus einem ABS-Regelungsprogramm.

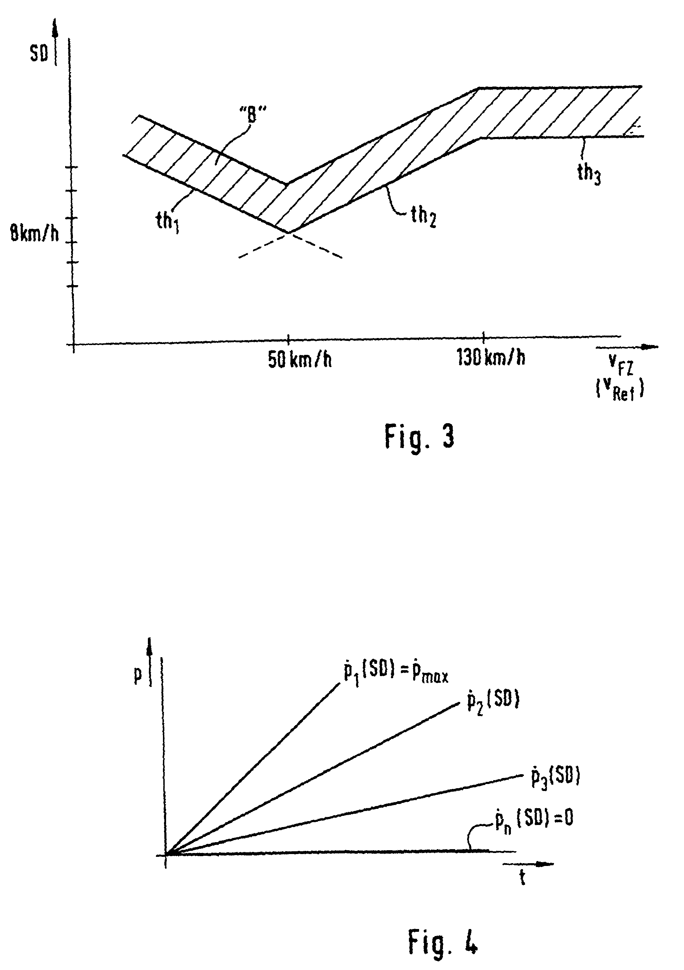

Das erfindungsgemäße Sonderprogramm findet außerhalb der eigentlichen Blockierschutzregelung statt. Nach der Raute 13 wird daher, wenn eine ABS-Regelung stattfindet (J=ja), die Standardregelung fortgesetzt. Ist jedoch die Antwort "nein" (N), ist also die ABS-Regelung nicht in Funktion, und wird gemäß Verzweigungsstelle 14 tatsächlich gebremst (Teilbremsung:J= ja), hängt der weitere Entscheidungsverlauf davon ab, ob das Vorliegen einer Kurvenfahrtsituation erkannt wurde (15: ja). Nun gilt es festzustellen, ob ein vorgegebener Radgeschwindigkeits-Differenz-Schwellwert SD (Verzweigung 16) überschritten wurde. Anschließend wird anhand der Fig. 3 dieser Vorgang bzw. dieser Schwellwert näher erläutert.

Wurde die Schwelle überschritten, wird über den "Ja"-Ausgang der Entscheidungsstelle 16 der Bremsdruckaufbau-Gradient deskurveninneren Rades, insbesondere des kurveninneren Vorderrades angepaßt bzw. entsprechend den Gegebenheiten variiert. Diese Operation wird in Fig. 2 durch 17 symbolisiert.

Der Bremsdruckaufbaugradient läßt sich allgemein durch die Formel

$$\dot{p} = f(th_1, th_{2,th3})$$

$$o < \dot{p} < \dot{p}_{max}$$

Diese Gleichung wird anhand der Fig. 3 näher erläutert.

Wurde die Schwelle nicht überschritten (16: N), hängt der weitere Programmverlauf gemäß Entscheidungsstelle 18 davon ab, ob der Sonder-Regelmodus bereits zu einer Beeinflussung des Bremsdruckabbaugradienten geführt hat. Wenn "nein" (Ausgang N der Verzweigung 18), führt der Programmlauf zum Ausgangspunkt zurück. Wenn "ja" und wenn der Schwellwert $th(th_1,th_2,th_3)$ und zusätzlich ein Toleranz- oder Hysteresewert, also die Größe:"Schwelle minus Hysterese", (Verzweigung 19: J) wieder unterschritten sind, wird der Bremsdruckaufbau, wie die Operation 20 symbolisiert, mit dem maximalen Gradienten $\dot{p} = \dot{p}_{max}$ fortgesetzt, weil der durch die Kurvenfahrt bedingte Sonderregelungsbedarf praktisch abgeschlossen ist. Ein Hysteresewert von 2 bis 6 km/h hat sich bei einem Ausführungsbeispiel der Erfindung als vorteilhaft erwiesen; wird der Schwellwert th um einen solchen Betrag unterschritten, führt dies zur Beendigung der Sonder-Regelung. Der Hysteresewert ist in Fig. 3 nicht dargestellt.

Lautet die Antwort auf die Frage 19 "Nein", wird die Bremsdruckmanipulation im Funktionsblock 21 in der gleichen Weise wie im Schritt 17 (Operator 17) durchgeführt: Die Manipulation des Bremsdruckaufbaugradienten bzw. Verringerung des Aufbaugradienten zur Verbesserung der Fahrstabilität wird fortgesetzt.

Die erfindungsgemäße Bremsdruckmanipulation am kurveninneren Rad setzt also, wie anhand des Flow-Charts nach Fig. 2 erläutert wurde, eine Teilbremsung außerhalb der ABS-Regelung voraus. Von entscheidender Bedeutung ist die Schlupf- oder Radgeschwindigkeits-Differenz-Schwelle, die gemäß Fig. 3 in Abhängigkeit von der Fahrzeuggeschwindigkeit oder Fahrzeugreferenzgeschwindigkeit variiert. Diese Radgeschwindigkeits-Differenz gibt die Differenz zwischen den aus den Schlupfwerten der beiden Räder einer Fahrzeugseite gebildeten Seitenschlupfsummen wieder. Als Formel ausgedrückt bedeutet dies:

$$SD = |(v_{VL} + v_{HL}) - (v_{VR} + v_{HR})|$$

In dieser Formel sind mit den Indices VL, VR das linke und rechte Vorderrad, mit den Indices HL und HR das linke und rechte Hinterrad bezeichnet. Folglich ist $(v_{VL} + v_{HL})$, die Seiten-Radgeschwindigkeitssumme der linken Räder, $(v_{VR} + v_{HR})$ die Seiten-Radgeschwindigkeitssumme der rechten Fahrzeugräder. Der Absolutwert der aus diesen beiden Summen gebildeten Differenz ergibt den Radgeschwindigkeits-Differenzwert SD.

Solange die Differenz SD unter der in Fig. 3 dargestellten, geschwindigkeitsabhängigen Schwelle liegt, die im vorliegenden Beispiel durch die Geraden $th_1,th_2,th_3$ definiert wird, wird der Bremsdruckaufbaugradient des kurveninneren Rades nicht beeinflußt. Folglich gilt $\dot{p} = \dot{p}_{max}$.

Erreicht und überschreitet die Differenz SD die Schwelle $th_1$ bzw. $th_2$ oder $th_3$, setzt die Reduzierung des Bremsdruckaufbaugradienten ein. Das Maß der Reduzierung des Bremsdruckgradienten von dem ursprünglichen Wert $\dot{p} = \dot{p}_{max}$ bis zu einem Wert $\dot{p} = \dot{p}_{min}$, wobei $\dot{p}_{min}$ sogar 0 werden kann, ist abhängig von der Höhe des Radgeschwindigkeits-Differenzwertes bzw. der Überschreitung dieser Schwellen $th_1$ bzw. $th_2$ oder $th_3$. Das schraffierte Band "B" in Fig. 3 gibt symbolisch den Bereich wieder, in den die Schlupfdifferenz eindringen kann. Von der "Eindringtiefe" in diesem Bereich ist die Verringerung des Bremsdruckaufbaugradienten abhängig.

Fig. 4 zeigt den Druckverlauf p über der Zeit. Die Geraden $\dot{p}1(SD)$, $\dot{p}_{2(}SD)$, $\dot{p}_3 (SD)$ und $\dot{p}_n (SD)$ sind Beispiele von Bremsdruckaufbaugradienten, die sich einstellen können. Der höchste Gradient $\dot{p}_1 (SD)= \dot{p}_{max}$ stellt den systembedingten Maximalgradienten dar. Dieser Gradient gilt, solange der Differenzwert SD unter den Schwellwerten $th_1$, $th_2,th_3$ liegt. Übersteigt beispielsweise der Differenzwert SD die Schwellwerte erheblich, wird durch die erfindungsgemäße Sonderregelung ein Bremsdruckaufbaugradient $\dot{p}_3$ eingestellt bzw. ergibt sich ein solcher Bremsdruckaufbaugradient. Die Waagerechte in Fig.4 symbolisiert den Grenzwert, nämlich den Gradienten $\dot{p}_n(SD) = 0$.

Der Verlauf der Schlupfschwelle nach Fig. 3 ist abhängig vom jeweiligen Fahrzeugtyp. Im dargestellten Beispiel erwies es sich als günstig, bei einer Fahrzeuggeschwindigkeit von ca. 50 km/h bereits bei einer relativ geringen Schlupfdifferenz von z.B. SD = 8 km/h auf die erfindungsgemäße Sonderregelung umzuschalten. Bei tieferen und höheren Fahrzeuggeschwindigkeiten liegen die Schwellen höher. Ab ca. 130 km/h bleibt im vorliegenden Beispiel die Schwelle ($th_3$) konstant.

## Patentansprüche

1. verfahren zur Verbesserung des Regelverhaltens eines Antiblockiersystems, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zur Erkennung einer Kurvenfahrtsituation und der Kurvenfahrtrichtung gewonnen werden, bei dem bei Kurvenfahrterkennung anstelle des Standard-Regelungsmodus ein Sonder- bzw. Kurven-Regelmodus in Funktion tritt bzw. in Funktion gesetzt wird, der bereits im Teilbremsbereich eine Verringerung des Bremsdrucks an dem kurveninneren Vorderrad und/oder an dem kurveninneren Hinterrad hervorruft, **dadurch gekennzeichnet, daß** im Teilbremsbereich beim Überschreiten eines Schwellwertes einer Radgeschwindigkeits-Differenz (SD), die die Differenz zwischen den aus den Geschwindigkeiten der beiden Räder einer Fahrzeugseite gebildeten Seiten-Radgeschwindigkeitssummen darstellt, der Gradient des Bremsdruckaufbaus am kurveninneren Vorderrad und/oder am kurveninneren Hinterrad in Abhängigkeit von dem Maß der Überschreitung des Schwellwertes der Radgeschwindigkeits-Differenz (SD) verringert wird.

2. Verfahren nach Anspruch 1, **dadurch gekennzeichnet, daß** der Schwellwert der Radgeschwindigkeits-Differenz (SD) in Abhängigkeit von der Fahrzeuggeschwindigkeit variiert wird.

3. Verfahren nach Anspruch 2, **dadurch gekennzeichnet, daß** der Gradient des Bremsdruckaufbaus ($\dot{p} = f(th_1, th_2)$) zwischen einem Maximalwert ($\dot{p}_{max}$), der unterhalb bzw. bis zum Erreichen des Schwellwertes der Radgeschwindigkeiten-Differenz (SD) gilt, und einem Minimalwert ($\dot{p}_{min} = 0$), der bei hoher Differenz gilt, variiert wird.

4. Verfahren nach einem oder mehreren der Ansprüche 1 bis 3, **dadurch gekennzeichnet, daß** der Gradient des Bremsdruckaufbaus durch Einleiten des Bremsdruckes über ein gepulst angesteuertes Einlaßventil und Variien des Pulsdauer-/Pulspausenverhältnisses eingestellt wird.

## Claims

1. A method for improving the control behaviour of an anti-lock control system, in particular for improving the steerability of the vehicle and the driving stability during cornering, wherein a vehicle reference speed is derived and criteria for identifying a cornering situation and the direction of cornering are obtained from the rotational behaviour of the vehicle wheels, wherein, instead of the standard control mode, a special control mode or rather corner control mode starts operating or is put into operation, respectively, when cornering is identified, said special control mode or corner control mode causing a reduction of the braking pressure on the front wheel on the inside of the corner and/or on the rear wheel on the inside of the corner already in the partial braking range,
**characterized in that** the gradient of the braking pressure build-up on the front wheel on the inside of the corner and/or on the rear wheel on the inside of the corner is reduced in the partial braking range when a threshold value of a wheel speed difference (SD) is exceeded, which difference is the difference between the wheel speed sums per side formed from the speeds of the two wheels of one side of the vehicle, the reduction taking place in dependence on the extent by which the threshold value of the wheel speed difference (SD) is exceeded.

2. A method as claimed in claim 1,
**characterized in that** the threshold value of the wheel speed difference (SD) is varied in dependence on the vehicle speed.

3. A method as claimed in claim 2,
**characterized in that** the gradient of the braking pressure build-up ($\dot{p} = f(th_1, th_2, th_3)$) is varied between a maximum value ($\dot{p}_{max}$) which applies below the threshold value of the wheel speed difference (SD), or rather until the threshold value of the wheel speed difference (SD) is reached, and a minimum value ($\dot{p}_{min} = 0$) which applies in case of a high difference.

4. A method as claimed in anyone or in several of claims 1 through 3,
**characterized in that** the gradient of the braking pressure build-up is adjusted by introducing the braking pressure via an inlet valve, actuated in a pulsed manner, and by varying the pulse-and-pulse-pause ratio.

## Revendications

1. Procédé d'amélioration du comportement de régulation d'un dispositif antiblocage, notamment d'amélioration de la dirigeabilité du véhicule et de la stabilité de conduite pendant une conduite en courbe, selon lequel, à partir du comportement de rotation des roues de véhicule, une vitesse de référence de véhicule est déduite et des critères sont obtenus pour la constatation d'une situation de conduite en courbe et de la direction de conduite en courbe, selon lequel, lors d'une constatation de conduite en courbe, à la place du mode de régulation standard, un mode de régulation spécial ou mode de régulation en courbe entre en fonction ou est mis en fonction, lequel mode de régulation provoque, déjà dans la zone de freinage partiel, une réduction de la pression de frein sur la roue avant intérieure à la courbe et/ou sur la roue arrière intérieure à la courbe, **caractérisé en ce que**, dans la zone de freinage partiel, lorsqu'est franchie une valeur de seuil d'une différence de vitesses de roue (SD) qui représente la différence entre les sommes de vitesses de roue par côté formée à partir des vitesses des deux roues d'un côté de véhicule, le gradient de l'établissement de pression de freinage sur la roue avant intérieure à la courbe et/ou sur la roue arrière intérieure à la courbe est réduit en fonction de la valeur du dépassement vis-à-vis de la valeur de seuil de la différence de vitesses de roue (SD).

2. Procédé suivant la revendication 1, **caractérisé en ce que** la valeur de seuil de la différence de vitesses de roue (SD) fait l'objet d'une variation en fonction de la vitesse de véhicule.

3. Procédé suivant la revendication 2, **caractérisé en ce que** le gradient de l'établissement de pression de frein ($\dot{p}$ = f(th$_1$, th$_2$)) fait l'objet d'une variation entre une valeur maximale ($\dot{p}_{max}$), qui est valable au-dessous de la valeur de seuil de la différence de vitesses de roue (SD) ou jusqu'à ce que soit atteinte cette valeur de seuil, et une valeur minimale ($\dot{p}_{min}$ = 0), qui est valable pour une différence élevée.

4. Procédé suivant une ou plusieurs des revendications 1 à 3, **caractérisé en ce que** le gradient de l'établissement de pression de freinage est réglé par introduction de la pression de freinage par une valve d'entrée, commandée par impulsions, et par variation du rapport durée d'impulsion/intervalle entre impulsions.

Fig. 1

Stand.-
ABS.-
Regel.-
Logik

Kurvenerkennung

Kurv.-
richt.

$fws_1$ $\lambda_1$
$fws_2$ $\lambda_2$
$fws_3$ $\lambda_3$
$fws_4$ $\lambda_4$

$v_1$
$v_2$
$v_3$
$v_4$

$v_{Ref}$

S1 S2 S3 S4

11 12 10 9 8 7 6 5 1 2 3 4

Fig. 2

Fig. 3

Fig. 4